# EUROPÄISCHE PATENTANMELDUNG

(11) **EP 4 060 176 A1**
(43) Veröffentlichungstag der Anmeldung: **21.09.2022**
(21) Anmeldenummer: 21162667.6
(22) Anmeldetag: 15.03.2021
(51) Int. Cl.: F02D 35/00, F02D 41/02

(54) **VERFAHREN ZUM BETRIEB EINER TRANSPORTKÄLTEMASCHINE**

(71) Anmelder: Schmitz Cargobull AG, 48341 Altenberge (DE)
(72) Erfinder: FLACKE, Norbert, 45894 Gelsenkirchen (DE); SCHANZMANN, Martin, 46395 Bocholt (DE); NIENHAUS, Andreas, 48653 Coesfeld (DE); HOLTKAMP, Christian, 48153 Münster (DE); DEBBRECHT, Jörg, 49124 Georgsmarienhütte (DE); TENBROCK, Rolf, 48683 Ahaus (DE)
(74) Vertreter: Cohausz & Florack

(57) **Zusammenfassung**

Die Erfindung betrifft ein Verfahren zum Betrieb einer an einem Nutzfahrzeug befestigten Transportkältemaschine (1,101,201), die eine in einem Laderaum des Nutzfahrzeugs enthaltene Laderaumatmosphäre temperiert, indem ein Strom (VA) der Laderaumatmosphäre durch die Transportkältemaschine (1,101,201) geleitet wird und dabei eine erste Temperiereinrichtung (8,108,208) passiert, in der der Strom (VA) der Laderaumatmosphäre abgekühlt oder erwärmt wird, wobei die im Laderaum jeweils gegebene Ist-Temperatur erfasst und die erste Temperiereinrichtung (8,108,208) mittels eines Dieselmotors (2,102,202) angetrieben wird, dessen an die erste Temperiereinrichtung (8,108,208) abgegebene Leistung so geregelt wird, dass die jeweils erfasste Ist-Temperatur im Laderaum in einem SollTemperatur-Bereich und die Drehzahl des Dieselmotors (2,102,202) in einem Soll-Drehzahl-Bereich liegt. Um die Gefahr von nachhaltigen Beschädigungen und Leistungseinbußen des Motors aufgrund von Verrußung zu minimieren, schlägt die Erfindung vor, dass der zeitliche Verlauf mindestens eines der Betriebsparameter oder Betriebsereignisse "Ende eines vorgegebenen Betriebszeitintervalls, Betriebsdauer, Betriebslast, Betriebstemperatur, Brennstoffverbrauch, Abgastemperatur, Abgaszusammensetzung" des Dieselmotors (2,102,202) erfasst und bei Erreichen eines für den betreffenden Betriebsparameter vorgegebenen Grenzwertes oder bei Eintreten des betreffenden Betriebsereignisses der Dieselmotor (2,102,202) über ein Regenerationsintervall mit einer zusätzlichen Last beaufschlagt wird.

## Beschreibung

Die Erfindung betrifft ein Verfahren zum Betrieb einer an einem Nutzfahrzeug befestigten Transportkältemaschine, die eine in einem Laderaum des Nutzfahrzeugs enthaltene Laderaumatmosphäre temperiert, indem ein Strom der Laderaumatmosphäre durch die Transportkältemaschine geleitet wird und dabei eine erste Temperiereinrichtung passiert, in der der Strom der Laderaumatmosphäre abgekühlt oder erwärmt wird. Die erste Temperiereinrichtung ist dabei mittels eines Dieselmotors angetrieben. Dessen an die erste Temperiereinrichtung abgegebene Leistung wird so geregelt, dass die jeweils erfasste Ist-Temperatur im Laderaum des Nutzfahrzeugs in einem Soll-Temperatur-Bereich und die Drehzahl des Dieselmotors in einem Soll-Drehzahl-Bereich liegen.

Moderne Konzepte von Transportkältemaschinen der hier in Rede stehenden Art bauen üblicherweise auf elektrisch angetriebenen Aggregaten auf. Die zu deren Betrieb benötigte elektrische Energie wird üblicherweise mit Hilfe eines Generators erzeugt, der von einem Dieselmotor angetrieben ist.

Neben Transportkältemaschinen, deren Aggregate elektrisch angetrieben sind, sind aber nach wie vor auch Transportkältemaschinen im Einsatz, bei denen die jeweils benötigte Temperierleistung rein mechanisch erzeugt wird.

Transportkältemaschinen werden zum Temperieren einer in einem Laderaum eines Nutzfahrzeugs vorhandenen Atmosphäre eingesetzt. Ziel der Temperierung ist die Aufrechterhaltung eines bestimmten Temperaturniveaus in dem im Laderaum verstauten Transportgut.

So werden zum Transport von tiefgefrorenen Lebensmitteln in einem Kühlbetrieb vorgeschriebene Tiefkühltemperaturen im Laderaum aufrechterhalten, während zum Transport von gekühlter Ware, wie beispielsweise sogenannter "Frischware", im Laderaum Temperaturen von typischerweise > 0° bis 10 °C eingestellt werden. Soll dagegen frostempfindliches Transportgut transportiert werden, muss bei entsprechend niedrigen Umgebungstemperaturen die Laderaumatmosphäre im Erwärmungsbetrieb erwärmt werden.

Dabei sind Transportkältemaschinen im Einsatz, die jeweils nur im Kühlbetrieb oder nur im Erwärmungsbetrieb betrieben werden können. Genauso sind aber auch Transportkältemaschinen bekannt, die sowohl im Kühlbetrieb, als auch im Erwärmungsbetrieb laufen können.

Für den Kühlbetrieb umfassen Transportkältemaschinen üblicherweise einen Verdichter zum Verdichten eines Kühlfluids, der bei elektrischer Ausführung des Antriebs über einen Elektromotor angetrieben ist oder bei mechanischer Ausführung des Antriebs über ein geeignetes Getriebe, typischerweise einen Riementrieb, direkt mechanisch an den Antriebsmotor angekoppelt ist.

Der Verdichter hat einen Verdichtereingang zum Ansaugen des zu verdichtenden Kühlfluids und einen Verdichterausgang, über den das verdichtete Kühlfluid aus dem Verdichter austritt. Das verdichtete Kühlfluid strömt durch einen ebenfalls zu der Transportkältemaschine gehörenden Kondensator, in dem das zuvor verdichtete Kältefluid unter Wärmeabgabe kondensiert, und einen Wärmetauscher, in dem das Kühlfluid unter Abkühlung expandiert, so dass einem getrennt von dem Kühlfluid durch den Wärmetauscher geleiteten Strom der im Laderaum enthaltenen Atmosphäre Wärme entzogen wird.

Transportkältemaschinen, die im Erwärmungsbetrieb betrieben werden können, umfassen beispielsweise eine elektrisch betriebene Heizeinrichtung, durch die der zu temperierende Luftstrom geleitet wird. Dabei umströmt der Luftstrom typischerweise zwei oder mehr Heizstäbe, die in Gruppen oder einzeln zugeschaltet werden können, um die abgegebene Wärmemenge zu variieren.

Aufgrund ihrer optimierten Energieeffizienz werden für den Antrieb bekannter Transportkältemaschinen in der Regel dieselbetriebene Verbrennungsmotoren verwendet. Die Regelung der jeweils bereitgestellten Leistung erfolgt über die Regelung der Drehzahl des Verbrennungsmotors und damit einhergehend des jeweils von dem Dieselmotor angetriebenen Aggregats. Durch die Drehzahlregelung wird der Verbrennungsmotor in einem Betriebspunkt gehalten, bei dem bei optimalem Drehmoment ein minimierter Kraftstoffverbrauch und ein ebenso minimierter Schadstoffausstoß gewährleistet sind. Ebenso umfassen die bekannten Transportkältemaschinen typischerweise eine Steuer- und Überwachungseinrichtung, die die jeweilige Temperiereinrichtung bedarfsbezogen so steuert, dass die jeweils benötigte Temperierleistung der Transportkältemaschine sicher erreicht wird.

Praktische Erfahrungen zeigen, dass bei Dieselmotoren, die über einen längeren Zeitraum unter zu geringer Last betrieben werden und bei denen die Betriebstemperaturen entsprechend lange auf einem niedrigen Niveau liegen, die Gefahr einer Verrußung der für eine ordnungsgemäße Verbrennung des Dieselkraftstoffs wesentlichen Bauelemente des Motors besteht. So resultieren zu niedrige Temperaturen in den Verbrennungsräumen des Motors in stark haftenden und zum Teil krustenartig dicken Rußanhaftungen an Injektordüsen, Ventilen und desgleichen. Diese Anhaftungen beeinträchtigen nicht nur die Leistungsfähigkeit des Motors, sondern können auch zu erheblichen nachhaltigen Schäden führen.

Vor dem Hintergrund des voranstehend erläuterten Standes der Technik hat sich die Aufgabe ergeben, ein Verfahren zum Betrieb einer Transportkältemaschine zu nennen, mit dem sich die Gefahr von nachhaltigen Beschädigungen und Leistungseinbußen des Motors aufgrund von Verrußung minimieren lässt.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Die Erfindung geht aus von einem Verfahren zum Betrieb einer an einem Nutzfahrzeug befestigten Transportkältemaschine, die eine in einem Laderaum des Nutzfahrzeugs enthaltene Laderaumatmosphäre temperiert, indem ein Strom der Laderaumatmosphäre durch die Transportkältemaschine geleitet wird und dabei eine erste Temperiereinrichtung passiert, in der der Strom der Laderaumatmosphäre abgekühlt oder erwärmt wird, wobei die im Laderaum jeweils gegebene Ist-Temperatur erfasst und die erste Temperiereinrichtung mittels eines Dieselmotors angetrieben wird, dessen an die erste Temperiereinrichtung abgegebene Leistung so geregelt wird, dass die jeweils erfasste Ist-Temperatur im Laderaum in einem Soll-Temperatur-Bereich und die Drehzahl des Dieselmotors in einem Soll-Drehzahl-Bereich liegt.

Erfindungsgemäß wird bei einem solchen Verfahren der zeitliche Verlauf mindestens eines der Betriebsparameter oder Betriebsereignisse "Ende eines vorgegebenen Betriebszeitintervalls, Betriebsdauer, Betriebslast, Betriebstemperatur, Brennstoffverbrauch, Abgastemperatur, Abgaszusammensetzung" des Dieselmotors erfasst und der Dieselmotor bei Erreichen eines für den betreffenden Betriebsparameter vorgegebenen Grenzwertes oder bei Eintreten des betreffenden Betriebsereignisses über ein Regenerationsintervall mit einer zusätzlichen Last beaufschlagt.

Erfindungsgemäß wird somit nach Ablauf eines in Abhängigkeit von bestimmten Betriebsparametern oder -ereignissen bestimmten Zeitintervalls der Antriebsmotor gezielt mit einer Last beaufschlagt, die unabhängig von den tatsächlichen Anforderungen an die Kühl- oder Erwärmungsleistung der Transportkältemaschine zugeschaltet wird. In Folge dieser zusätzlichen Belastung und der gleichzeitig greifenden Drehzahlregelung, durch die der Motor im jeweiligen Solldrehzahlbereich gehalten wird, wird der Dieselmotor höher belastet mit der Folge, dass auch seine Betriebstemperatur ansteigt.

Höhere Betriebstemperaturen führen zu besserer Verbrennung der Kohlenstoffprodukte im Dieselbrennstoff mit dem Ergebnis, dass vorhandene Rußanhaftungen im heißeren Brennraum und an den vom ebenso heißeren Abgasstrom umströmten Bauelementen des Motors abgebrannt werden. Der Motor wird auf diese Weise "freigebrannt", so dass er am Ende des Regenerationsintervalls bei geringerer Rußbildung wieder eine erhöhte Leistung bringt und die mit der Verrußung einhergehenden Risiken minimiert sind.

Der Beginn des Regenerationsintervalls kann im einfachsten Fall dadurch bestimmt werden, dass der Ablauf eines vorgegebenen Betriebszeitintervalls überwacht wird, d.h. einer fest vorgegebenen Zeit, bei deren Ende der nächste Regenerationsdurchlauf unabhängig von sonstigen Ereignissen gestartet wird.

Ebenso kann zur Bestimmung des Beginns eines Regenerationsintervalls die Betriebsdauer überwacht werden, über die der Verbrennungsmotor der Transportkältemaschine seit dem Ende des letzten Regenerationsintervalls jeweils tatsächlich in Betrieb ist. Pausenzeiten, in denen der Motor abgestellt ist, können dabei beispielsweise ausgespart oder anders bewertet werden als die Zeiten, in denen der Motor tatsächlich läuft. Erreicht die so ermittelte Betriebsdauer eine bestimmte Höchstgrenze, kann dann der Regenerationsbetrieb beispielsweise unabhängig davon, ob im Laufe des zwischen zwei Regenerationsintervallen verstrichenen Zeitintervalls Betriebszustände vorlagen, bei denen das Risiko einer Verrußung bestand, gestartet werden.

Verfeinert werden kann die Bestimmung des Beginns des Regenerationsintervalls dadurch, dass ergänzend oder alternativ zu den beiden voranstehend erläuterten Möglichkeiten der Bestimmung des Zeitpunkts, an dem ein Regenerationsintervall beginnt, durch Erfassung beispielsweise der Dauer, über die der Dieselmotor in einem die Gefahr der Verrußung mit sich bringenden Betriebszustand gelaufen ist, der Startzeitpunkt der Regeneration bestimmt wird. Erreicht oder überschreitet die Gesamtdauer dieser Betriebszustände beispielsweise einen Höchstwert, kann dieses Ereignis einen Auslöser für den Beginn der Regeneration bilden. Wird gleichzeitig erfasst, ob der Motor zwischen zwei Betriebszuständen, die für sich gesehen die Gefahr von Verrußung auslösen, über einen ausreichend langen Zeitraum in einem Betriebspunkt betrieben wird, bei dem es zum Abbrennen vorhandener Verrußung kommt, kann die Erfassung der Gesamtdauer der hinsichtlich der Verrußung riskanten Betriebszustände zurückgesetzt werden und der Start des Regenerationsintervalls sich entsprechend verzögern.

In entsprechender Weise können beispielsweise der zeitliche Verlauf der Betriebslast, die beispielsweise durch Messung der Leistungsaufnahme mindestens eines der von dem Dieselmotor angetriebenen Verbrauchers bestimmt werden kann, der zeitliche Verlauf der Betriebstemperatur des Verbrennungsmotors und/oder der zeitliche Verlauf des Brennstoffverbrauchs erfasst werden, um die Notwendigkeit einer Regeneration und dementsprechend den Beginn eines Regenerationsintervalls zu bestimmen. Über einen bestimmten Zeitraum unterhalb eines Sollwerts liegende Betriebstemperaturen stehen dabei genauso für ein erhöhtes Verrußungsrisiko wie ein steigender Brennstoffverbrauch, der Folge von durch die Verrußung von Ventilen oder Einspritzdüsen unzureichender Verbrennung sein kann. Die Erfassung der Betriebstemperatur kann in jeder für diese Zwecke bekannten Weise erfolgen. Beispielsweise kann sie als Messung der Temperatur des Kühlwassers, der Temperatur des Motorgehäuses, der Temperatur des Motoröls, der Temperatur eines für die Temperaturentwicklung des Motors repräsentativen Bauteils, der Temperatur im Verbrennungsraum des Motors oder desgleichen durchgeführt werden.

Ebenso können als Parameter, der bei Erreichen eines bestimmten Grenzwerts den Regenerationsbetrieb auslöst, die Abgastemperatur oder die Zusammensetzung des Abgases überwacht werden. Werden unterhalb eines Grenzwerts liegende Abgastemperaturen gemessen oder enthält das Abgas bestimmte Verbrennungsprodukte, die auf eine unvollständige Verbrennung des Brennstoffs hindeuten, in Gehalten, die oberhalb eines Grenzwerts liegen, so kann dies ebenfalls ein Signal für eine übermäßige Verrußung im Brennraumbereich darstellen, die einen Regenerationsbetrieb erforderlich macht.

Dabei kann die Überwachung einzelner Betriebsparameter beispielsweise auch mit einer Überwachung der Betriebsdauer kombiniert werden. So kann es beispielsweise zweckmäßig sein, unabhängig vom Verlauf des jeweiligen Betriebsparameters in jedem Fall nach Ablauf einer gewissen Höchstbetriebsdauer den Regenerationsbetrieb zu starten. Auf diese Weise lässt sich beispielsweise auch bei Fehlern in der Überwachung des jeweiligen Betriebsparameters die Gefahr der Verrußung sicher abwenden.

Zusätzlich kann auch eine Möglichkeit zum manuell erfolgenden Auslösen des Regenerationsbetriebs durch eine Bedienperson vorgesehen sein. Dies kann beispielsweise im Rahmen eines Services der Transportkältemaschine zweckmäßig sein.

Die zusätzliche Last, mit der der Dieselmotor während des Regenerationsbetriebs beaufschlagt wird, kann grundsätzlich in jeder beliebigen Weise erzeugt werden. So ist es beispielsweise denkbar, eine Bremseinrichtung, wie eine elektromagnetische Bremse oder desgleichen, einzusetzen, um dem Dieselmotor während des Regenerationsintervalls zeitlich begrenzt mehr Leistung abzuverlangen.

Eine bei Transportkältemaschinen der hier in Rede stehenden Art besonders zweckmäßige Möglichkeit, die zusätzliche Last, mit der der Dieselmotor während des Regenerationsintervalls beaufschlagt wird, zu erzeugen, besteht darin, dass der Strom der Laderaumatmosphäre auf seinem Weg durch die Transportkältemaschine an einer zweiten Temperiereinrichtung entlang geleitet wird, in der eine Temperierung des Stroms der Laderaumatmosphäre erfolgt, die der Temperierung entgegengesetzt ist, welche durch die erste Temperiereinrichtung bewirkt wird.

Das bedeutet, dass bei einer Transportkältemaschinebei der im Normalbetrieb die erste Temperiereinrichtung eine Abkühlung des Stroms der Laderaumatmosphäre bewirkt, während des Regenerationsintervalls der Strom der Laderaumatmosphäre entlang einer oder durch eine zweite Temperiereinrichtung, geführt wird, um ihn zu erwärmen. Die zweite Temperiereinrichtung heizt somit den Strom der Laderaumatmosphäre entgegen der Kälteleistung auf, die von der ersten Temperiereinrichtung auf den Strom der Laderaumatmosphäre übertragen wird.

Dies hat zur Folge, dass von der ersten Temperiereinrichtung eine größere Kälteleistung erbracht werden muss, um im Laderaum die Soll-Temperatur der Laderaumatmosphäre zu erreichen. Da die erste Temperiereinrichtung vom Dieselmotor angetrieben wird, wird dieser entsprechend höher belastet und das gewünschte Ziel der Erhöhung der Betriebstemperatur des Dieselmotors und des damit einhergehenden Freibrennens erreicht..

Genauso kann bei einer Transportkältemaschine, die normalerweise im Erwärmungsbetrieb betrieben wird, bei der also im Normalbetrieb die erste Temperiereinrichtung eine Erwärmung des Stroms der Laderaumatmosphäre bewirkt, während des Regenerationsintervalls der Strom der Laderaumatmosphäre entlang einer Kältequelle, der zweiten Temperiereinrichtung, geführt werden, um ihn abzukühlen. Die zweite Temperiereinrichtung kühlt in diesem Fall somit den Strom der Laderaumatmosphäre entgegen der Wärmeleistung der ersten Temperiereinrichtung ab. Dies hat zur Folge, dass von der ersten Temperiereinrichtung eine größere Heizleistung erbracht werden muss, um im Laderaum die Soll-Temperatur der Laderaumatmosphäre zu erreichen. Da auch bei dieser Variante die erste Temperiereinrichtung vom Dieselmotor angetrieben wird, wird dieser entsprechend höher belastet und das gewünschte Ziel der Erhöhung der Betriebstemperatur des Dieselmotors und des damit einhergehenden Freibrennens ebenfalls erreicht.

Der für die Übertragung von Wärme oder Kälte erforderliche Kontakt zwischen dem Strom der Laderaumatmosphäre und der ersten und/oder zweiten Temperiereinrichtung kann in jeder geeigneten Weise erfolgen. So kann der Strom der Laderaumatmosphäre für die Wärme- oder Kälteübertragung entlang der betreffenden Temperiereinrichtung geführt werden, indem er durch sie hindurchströmt oder sie anströmt.

Besonders eignet sich das erfindungsgemäße Verfahren zum Betrieb einer Transportkältemaschine, die einen von dem Dieselmotor angetriebenen Verdichter zum Verdichten eines Kühlfluids, einen nach dem Verdichter von dem Kühlfluid durchströmten Kondensator, in dem das verdichtete Kühlfluid unter Freisetzung von Wärme kondensiert, eine Expansionseinrichtung, an der das Kühlfluid unter Entzug von Wärme expandiert, und einen von dem expandierten und abgekühlten Kühlfluid durchströmten Wärmetauscher umfasst, von dem das Kühlmittel zurück zum Verdichter strömt. Die genannten Aggregate sind somit Teil eines konventionellen geschlossenen Kühlkreislaufs, bei dem die Expansionseinrichtung beispielsweise durch eine hierzu aus dem Stand der Technik bekannte Drossei oder ein ebenso bekanntes Expansionsventil gebildet sein kann.

Im Fall, dass eine solcherart ausgestattete Maschine im Normalbetrieb die Laderaumatmosphäre kühlt, wird die erste Temperiereinrichtung durch den Wärmetauscher der Transportkältemaschine gebildet, in dem der Strom der Laderaumatmosphäre abgekühlt wird. Als zweite Temperiereinrichtung, die während des Regenerationsintervalls eine Erwärmung des Stroms der Laderaumatmosphäre bewirkt, kann der Abwärme abstrahlende Kondensator des Kühlkreislaufs eingesetzt werden. Selbstverständlich ist es ebenso denkbar, für die Erwärmung des Stroms der Laderaumatmosphäre auch einen separaten Kondensator vorzusehen, der im Strömungsweg des Stroms angeordnet ist und für die Erwärmung während des Regenerationsintervalls bedarfsweise in den Kühlkreislauf der Transportkältemaschine geschaltet wird. Ebenso ist es bei dieser Variante der Erfindung möglich, als zweite Temperiereinrichtung eine über eine separate Energieversorgung gespeiste Heizeinrichtung vorzusehen. So kann die zweite Temperiereinrichtung durch eine separate Heizeinrichtung gebildet sein, die ebenfalls von dem Dieselmotor angetrieben ist und während des Regenerationsintervalls bedarfsweise von dem Strom der Laderaumatmosphäre an- oder durchströmt wird.

Besonders wirksam im Hinblick auf das erfindungsgemäß angestrebte Ergebnis erweist sich eine elektrische Heizeinrichtung, die Teil einer Transportkältemaschine ist, bei denen die aktiven Komponenten des Kühlkreislaufs elektrisch angetrieben sind.

Dementsprechend sieht eine für die Praxis besonders wichtige Ausgestaltung der Erfindung vor, dass bei einer erfindungsgemäß betriebenen Transportkältemaschine mindestens eine der Temperiereinrichtungen elektrisch angetrieben ist, und dass der Dieselmotor zum Antrieb der elektrisch angetriebenen Temperiereinrichtung einen Generator antreibt, der die elektrische Energie erzeugt, mit der die jeweilige Temperiereinrichtung angetrieben wird. Bei einer solcherart konzipierten Transportkäitemaschine kann zur Erzeugung der zusätzlichen Last, mit der der Dieselmotor während des Regenerationsintervalls beaufschlagt wird, während des Regenerationsintervalls ein zusätzlicher elektrischer Verbraucher eingeschaltet werden, der ebenfalls mittels des von dem Dieselmotor angetriebenen Generators mit elektrischer Energie versorgt wird. Der dadurch erhöhte Bedarf an elektrischer Energie kann nur durch eine erhöhte Leistung des Dieselmotors kompensiert werden mit der Folge, dass die Temperatur des Dieselmotors in dem für die erfindungsgemäßen Zwecke ausreichenden Maße ansteigt.

Auch bei Transportkältemaschinen, die zum Beheizen der Atmosphäre des Laderaums eines Nutzfahrzeugs vorgesehen sind, kann als erste Temperiereinrichtung eine von dem Laderaumatmosphären-Strom durchströmte oder angeströmte, elektrisch betriebene Heizung eingesetzt werden, während als elektrischer Verbraucher, der zur temporären Erhöhung der Last des Dieselmotors während der Regenerationsphase zugeschaltet wird, eine elektrisch betriebene Kühleinrichtung zum Abkühlen Stroms der Laderaumatmosphäre zum Einsatz kommen kann.

Wie oben schon erwähnt, umfassen elektrische Heizeinrichtungen typischerweise mehrere separat oder in Gruppen schaltbare Heizspiralen oder -stäbe, um die Wärmeleistung dem jeweiligen Bedarf anpassen zu können. Im Fall, dass als zweite Temperiereinrichtung eine während des Regenerationsintervalls "gegen" die Kühlleistung der ersten Temperiereinrichtung arbeitende derartige elektrische Heizung eingesetzt wird, kann ausgehend von einer Mindestleistung die Heizleistung kontinuierlich oder stufenweise gesteigert werden, bis der Motor innerhalb kurzer Betriebsdauer die gewünschte Betriebstemperatur erreicht hat. Anschließend kann die Last dann gegebenenfalls durch Abschalten von einzelnen oder von Gruppen von Heizstäben auf ein Niveau eingestellt werden, bei dem die zum Freibrennen optimale Betriebstemperatur vorliegt.

Besonders vorteilhaft lässt sich das erfindungsgemäße Verfahren bei solchen Transportkältemaschinen einsetzen, die sowohl zum Erwärmen, als auch zum Kühlen der Atmosphäre im Laderaum eines Nutzfahrzeugs eingerichtet sind.

Der besondere Vorteil besteht hierbei darin, dass durch die während des Regenerationsintervalls temporär erfolgende Zuschaltung der für den jeweiligen Normal-Betriebszustand nicht benötigten Einrichtung die Belastung derjenigen Einrichtung, die für die Aufrechterhaltung des betreffenden Betriebszustandes zum "Kühlen" oder "Erwärmen" benötigt wird, zusätzlich erhöht werden kann.

Als für die Durchführung der Erfindung besonders vorteilhaft erweisen sich hier solche Transportkältemaschinen, die als ersten elektrischen Verbraucher eine in einem Heizbetrieb elektrisch betriebene Heizeinrichtung zum Erwärmen des Luftstroms aufweisen und als zweiten elektrischen Verbraucher eine Kühleinrichtung mit einem im Kühlbetrieb elektrisch betriebenen Verdichter. Während des Regenerationsbetriebs kann dann im Fall, dass die Transportkältemaschine im Kühlbetrieb läuft, als elektrischer Verbraucher die Heizeinrichtung zusätzlich bei der jeweiligen Sollleistung betrieben werden, wogegen im Fall, dass die Transportkältemaschine im Erwärmungsbetrieb läuft, als elektrischer Verbraucher die Kühleinrichtung zusätzlich bei der jeweiligen Sollleistung betrieben wird.

Alternativ kann das erfindungsgemäße Verfahren auch bei solchen Transportkältemaschinen angewendet werden, bei denen die Kühleinrichtung als elektrischer Verbraucher elektrisch betrieben wird, während der Heizeinrichtung die an den Strom der Laderaumatmosphäre abzugebende Wärme durch ein wärmeführendes Fluid zugeführt wird. Bei dem wärmeführenden Fluid kann es sich beispielsweise um das in der Kühleinrichtung verwendete Kühlfluid handeln, das, nachdem es im Verdichter verdichtet worden ist, im Kondensator unter Freiwerden von Wärme kondensiert. Genauso ist es aber auch denkbar, andere wärmeführende Fluide, wie das Kühlwasser oder Abgas des Verbrennungsmotors, oder Einrichtungen für die Erwärmung des zu temperierenden Stroms an Laderaumatmosphäre zu nutzen. Beispielsweise könnte der Strom der Laderaumatmosphäre hierzu auch entlang eines Kühlers geleitet werden, der zur Kühlung des Kühlwassers des Verbrennungsmotors vorgesehen ist.

Das jeweilige wärmeführende Medium kann dabei in einer Kondensatorschaltung, Wärmepumpenschaltung oder Heißgasbypassschaltung oder durch jeden anderen Wärmetauscher geeigneter Bauform mit dem an sich abzukühlenden Strom der Laderaumatmosphäre so in Kontakt gebracht werden, dass die von dem wärmeführenden Medium mitgeführte Wärme an den an sich abzukühlende Strom der Laderaumatmosphäre abgegeben und so die Leistungsanforderung an die elektrisch angetriebene Kühleinrichtung erhöht wird.

In zur voranstehend erläuterten Variante umgekehrter Weise ist es ebenso möglich, die Heizeinrichtung als elektrischen Verbraucher elektrisch zu betreiben, während der Kühleinrichtung die an den Strom der Laderaumatmosphäre abzugebende Wärme durch ein kälteführendes Fluid zugeführt wird. Auch hierzu können die in der Transportkältemaschine jeweils vorhandenen Fluidströme genutzt werden, die kälter sind als die Solltemperatur, auf die das Fluid mittels der hier elektrischen Heizeinrichtung jeweils gebracht werden soll.

Um den Dieselmotor möglichst schnell und zielsicher in den für das Abbrennen von Verrußungen günstigen Betriebszustand zu bringen, kann während der Regeneration die von dem Generator abgegebene elektrische Leistung überwacht werden. Stellt sich dabei heraus, dass die abgegebene elektrische Leistung außerhalb des Sollbereichs liegt, kann die Leistung des elektrischen Verbrauchers so lange nachgeregelt werden, bis die vom Generator abgegebene elektrische Leistung innerhalb des Sollbereichs liegt.

So kann beispielsweise die durch den zusätzlichen Verbraucher am Dieselmotor anliegende Last so gesteuert werden, dass zu Beginn des Regenerierungsintervalls eine hohe Last erzeugt wird, um den Dieselmotor schnell auf die optimale Temperatur zu bringen und anschließend auf ein Belastungslevel zurückgenommen wird, das ausreicht, um den Dieselmotor für den Rest des Regenerierungsintervalls bei der optimalen Betriebstemperatur zu halten.

Unter den in der Praxis typischerweise herrschenden Bedingungen hat es sich bewährt, wenn die Drehzahlregelung die Drehzahl des Dieselmotors während der Regenerationsphase in einem Sollbereich hält, der von 1150 min⁻¹ bis 2500 min⁻¹, insbesondere von 1200 min⁻¹ bis 2300 min⁻¹ oder 1200 - 1300 min⁻¹ reicht. Die Dieselmotoren von Transportkältemaschinen haben dabei typischerweise Leistungen von 2 kW bis 40 kW. Die an den Dieselmotoren bei Transportkältemaschinen anliegende Last beträgt in der Praxis typischerweise 1 - 25 kW. Das Zeitintervall, dass zwischen zwei Regenerationsintervallen vergehen kann, beträgt in der Praxis typischerweise 100 - 400 h, insbesondere 200 - 300 h, wobei Intervalle von 220 - 270 h besonders zweckmäßig sind. Die Dauer eines Regenerationsintervalls beträgt typischerweise 10 - 30 min, insbesondere 10 - 20 min.

Grundsätzlich ist die Erfindung zur Anwendung bei allen Transportkältemaschinen unabhängig davon geeignet, welches gasförmige Medium die Atmosphäre des Laderaums bildet, die temperiert werden soll. Besonders bewährt hat sich die Erfindung bei Transportkältemaschinen, die zum Temperieren einer durch Luft gebildeten Laderaumatmosphäre eingesetzt werden.

Der jeweils durch die Transportkältemaschine geleitete Strom an Laderaumatmosphäre kann in bekannter Weise in einem geschlossenen Kreislauf geführt werden, um Energieverluste möglichst gering zu halten. Alternativ oder ergänzend zu einer im geschlossenen Kreislauf erfolgenden Temperierung kann es aber auch zweckmäßig sein, zumindest von Zeit zu Zeit aus der Umgebung angesaugte Luft in der Transportkältemaschine zu temperieren und in den Laderaum zu leiten, um die dort vorhandene Atmosphäre aufzufrischen.

Erfindungsgemäß betriebene Transportkältemaschinen eignen sich zum Kühlen einer im Laderaum eines Nutzfahrzeugs vorhandenen Atmosphäre. Typischerweise handelt es sich bei einem solchen Nutzfahrzeug um einen Sattelauflieger für einen Sattelzug, einen Anhänger oder einen Lastkraftwagen mit einem Kofferaufbau, der den Laderaum umgrenzt.

Nachfolgend wird die Erfindung anhand einer ein Ausführungsbeispiel darstellenden Zeichnung näher erläutert. Es zeigen jeweils schematisch:
- Fig. 1: Komponenten einer ersten Variante einer Transportkältemaschine im Normalbetrieb in schematischer Darstellung;
- Fig. 2: ein Flussdiagramm, in dem ein erfindungsgemäßer Verfahrensablauf dargestellt ist;
- Fig. 3a: Komponenten einer zweiten Variante einer Transportkältemaschine im Normalbetrieb in schematischer Darstellung;
- Fig. 3b: Komponenten der zweiten Variante einer Transportkältemaschine im Regenerationsbetrieb in schematischer Darstellung;
- Fig. 4a: Komponenten einer dritten Variante einer Transportkältemaschine im Normalbetrieb in schematischer Darstellung;
- Fig. 4b: Komponenten der dritten Variante einer Transportkältemaschine im Regenerationsbetrieb in schematischer Darstellung.

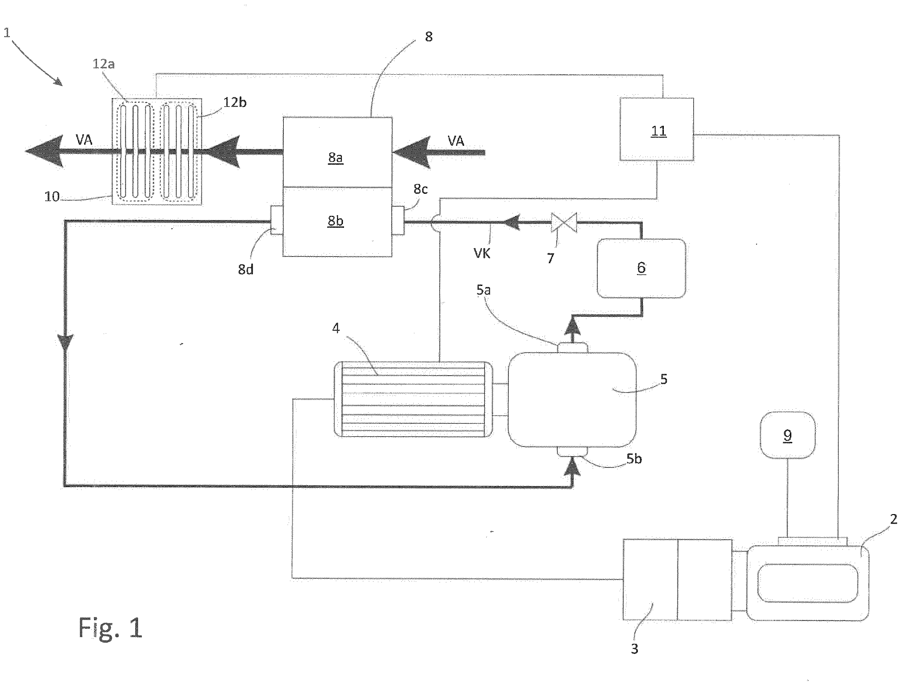

Die in Fig. 1 schematisch dargestellte Transportkältemaschine 1 dient zum Temperieren, d.h. zum wahlweisen Kühlen und/oder Erwärmen, einer im Laderaum eines hier nicht gezeigten Nutzfahrzeugs vorhandenen Atmosphäre. Hierzu ist die Transportkältemaschine 1 typischerweise an der Außenseite einer Seitenwand, insbesondere einer Stirnwand, eines Nutzfahrzeug-Aufbaus befestigt, das den Laderaum umgrenzt.

Die Transportkältemaschine 1 basiert auf einer an sich bekannten, handelsüblichen Transportkältemaschine, wie sie beispielsweise in der DE 10 2010 022 993 A1 beschrieben ist. Deshalb werden hier nur die für das Verständnis der Erfindung erforderlichen Bauteile und deren Zusammenwirken sowie die Besonderheiten beschrieben, in denen sich die erfindungsgemäße Transportkältemaschine 1 von konventionellen Transportkältemaschinen unterscheidet.

So umfasst die Transportkältemaschine 1 einen Dieselmotor 2, einen Generator 3, einen elektrisch betriebenen Antriebsmotor 4, einen Verdichter 5, einen Kondensator 6, eine Drossel 7, einen Wärmetauscher 8, eine Drehzahlregeleinrichtung 9, eine Heizeinrichtung 10 und eine Steuer- und Überwachungseinrichtung 11.

Bei dem Dieselmotor 2 handelt es sich um einen handelsüblichen Common-Rail-Motor mit einer maximalen Leistung von ca. 18,9 kW (ca. 26 PS). Der Dieselmotor 2 treibt den Generator 3 an, der elektrische Energie zum Antrieb des elektrischen Antriebsmotors 4 erzeugt. Mittels der Drehzahlregeleinrichtung 9 wird der Dieselmotor 2 in konventioneller Weise bei einer konstanten Betriebsdrehzahl von beispielsweise 1600 min⁻¹ in einem hinsichtlich der Energieausnutzung optimalen Betriebspunkt gehalten.

Der elektrische Antriebsmotor 4 treibt über eine Antriebswelle den Verdichter 5 an. Durch Erhöhung oder Verminderung der Drehzahl des elektrischen Antriebsmotors 4 kann die Verdichterleistung des Verdichters 5 variiert werden. Mit der Erhöhung der Drehzahl des elektrischen Antriebsmotors 4 geht ein erhöhter Bedarf an elektrischer Energie einher. Der elektrische Antriebsmotor 4 stellt als solcher einen ersten elektrischen Verbraucher dar, der in Abhängigkeit vom jeweiligen Bedarf an Kühlleistung gesteuert wird.

Der ebenfalls konventionell ausgebildete Wärmetauscher 8 bildet die erste Temperiereinrichtung der Transportkältemaschine 1 und hat eine Sekundärseite 8a, durch die im Betrieb der Transportkältemaschine 1 ein aus der im Laderaum enthaltenen Luftatmosphäre entnommener, zu temperierender Luftstrom VA geleitet wird. Die Primärseite 8b des Wärmetauschers 8 wird dagegen von einem Kühlfluid-Volumenstrom VK durchströmt, der über eine Zuströmleitung vom Verdichterausgang 5a über den Kondensator 6 und die Drossel 7 zum Wärmetauschereingang 8c strömt.

Der die Drossel 7 passierende Kühlfluid-Volumenstrom VK expandiert im Wärmetauscher 8. Durch die Expansion wird der Umgebung Wärme entzogen mit der Folge, dass der durch die Sekundärseite 8a strömende Laderaumatmosphären-Strom VA abgekühlt wird. Das Kühlfluid VK tritt aus dem Wärmetauscherausgang 8d aus und strömt im Kreislauf über eine Rückführleitung zurück zur Ansaugseite 5b des Verdichters 5, der das zurückströmende Kühlfluid verdichtet, um es dann über die Zuströmleitung wieder dem Kondensator 6 zuzuführen.

Die beim Ausführungsbeispiel der Fig. 1 als zweite Temperiereinrichtung dienende Heizeinrichtung 10 ist im Strömungsweg des zu temperierenden Luftstroms VA beispielsweise hinter dem Wärmetauscher 8 angeordnet. Die Heizeinrichtung 10 umfasst vom Luftstrom VA umströmte elektrisch betriebene Heizstäbe, von denen jeweils eine bestimmte Anzahl, wie beispielsweise drei Heizstäbe, zu einer separat schaltbaren Heizstabgruppe 12a,12b zusammengefasst ist.

Die elektrischen Heizstäbe der Heizeinrichtung 10 und der elektrische Antriebsmotor 4 stellen jeweils elektrische Verbraucher der Transportkältemaschine 1 dar, welche bei Bedarf durch den mittels des von dem Dieselmotor 2 angetriebenen Generators 3 mit elektrischer Energie versorgt werden.

Befindet sich die Transportkältemaschine 1 im Kühlbetrieb, so ist in den Betriebszeitintervallen, d.h. außerhalb des Regenerationsbetriebs, die Heizeinrichtung 10 abgeschaltet. Die jeweils an den Luftstrom VA über den Wärmetauscher 8 abgegebene Kühlleistung wird über die Drehzahl des elektrischen Antriebsmotors 4 eingestellt.

Entsprechend ist der Antriebsmotor 4 im Heizbetrieb abgeschaltet und die an den Luftstrom VA abgegebene Wärmeleistung wird über die Anzahl der jeweils ab- oder zugeschalteten Gruppen 12a, 12b von Heizstäben der Heizeinrichtung 10 bestimmt.

Die Steuer- und Überwachungseinrichtung 11 überwacht den Betriebszustand des Dieselmotors 2 hinsichtlich des Ablaufs eines Betriebszeitintervalls und des Verlaufs einer Betriebsdauer, über die der Dieselmotor 2 seit Beginn des jeweiligen Betriebszeitintervalls in Betrieb ist, die am Dieselmotor 2 anliegende Betriebslast und seine Betriebstemperatur. Einer ihrer Steuerausgänge ist mit der Heizeinrichtung 10 und ein weiterer Steuerausgang mit dem elektrischen Antriebsmotor 4 des Verdichters 5 verkoppelt.

Stellt die Überwachungseinrichtung 11 fest, dass seit dem letzten zur Vermeidung von Verrußung durchgeführten Freibrennen ("Regenerationsbetrieb") ein Betriebszeitintervall von beispielsweise 250 Stunden vergangen ist, so startet sie den Regenerationsbetrieb zwangsweise, d.h. unabhängig von sonstigen Ereignissen.

Genauso kann der Regenerationsbetrieb von der Überwachungseinrichtung 11 gestartet werden, wenn die Überwachungseinrichtung 11 feststellt, dass die Betriebsdauer, über die der Dieselmotor 2 seit dem letzten Regenerationsbetrieb tatsächlich gelaufen ist, eine Höchstdauer überschreitet.

Des Weiteren kann die Überwachungseinrichtung 11 den Start des Regenerationsbetriebs auslösen, wenn sie feststellt, dass die Summe der Betriebszeiten mit Verrußungsrisiko, d.h. der Betriebszeiten, in denen der Dieselmotor 2 mit einer Betriebslast oder bei Betriebstemperaturen gelaufen ist, die die Gefahr von Verrußungen auslösen, größer ist als eine bestimmte Grenzdauer.

Das Risiko von Verrußung auslösenden Betriebszuständen liegt im hier beschriebenen Beispiel vor, wenn der vom Generator 3 zum Betrieb des jeweiligen elektrischen Verbrauchers weniger als 20 A liefern muss und die am direkt mit dem Generator 3 verkoppelten Dieselmotor 2 anliegende Last entsprechend gering ist.

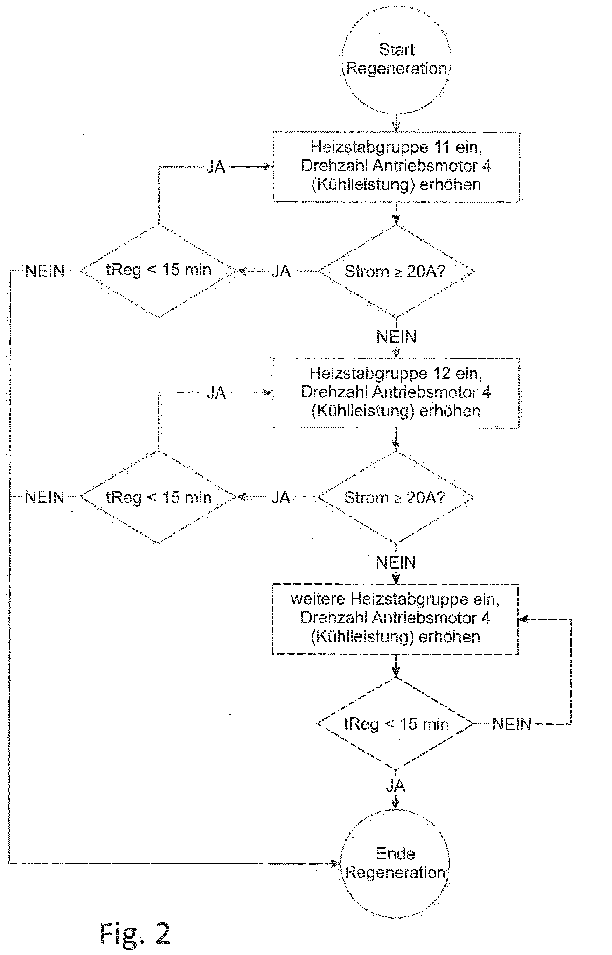

Tritt eines der Ereignisse "Ende des Betriebszeitintervalls, Ende der Betriebsdauer, Überschreiten der Grenzdauer für den Betrieb mit Verrußungsrisiko" ein, so startet die Steuer- und Überwachungseinrichtung 11 den Regenerationsbetrieb. Die dabei absolvierten Schritte sind in Fig. 2 schematisch dargestellt.

Befindet sich die Transportkältemaschine 1 im Kühlbetrieb, so gibt die Steuer- und Überwachungseinrichtung 11 dazu an die Heizeinrichtung 10 ein Signal zum Einschalten der ersten Gruppe 12a von Heizstäben der Heizeinrichtung 10 ab. Schon durch dieses Einschalten wird die am Generator 3 anliegende elektrische Last und damit einhergehend die am Dieselmotor 2 anliegende Last erhöht. Die Drehzahlregelung 9 regelt den Dieselmotor 2 jedoch so, dass er trotz der erhöhten Last weiterhin mit einer Solldrehzahl von 1600 min⁻¹ läuft. Die hierzu erforderliche höhere Leistung hat zur Folge, dass die Betriebstemperatur des Dieselmotors 2 ansteigt.

Zu einem zusätzlichen Anstieg der elektrischen Last und damit einhergehend der Belastung des Dieselmotors 2 kommt es dabei dadurch, dass durch den Betrieb der Heizeinrichtung 10 der aus dem Wärmetauscher 8 austretende gekühlte Luftstrom VA wieder erwärmt wird. Dementsprechend muss die Leistung des Verdichters 5 weiter erhöht werden, um die Temperatur des Luftstroms VA im Laderaum des Nutzfahrzeugs dennoch auf dem vorgegebenen Sollniveau zu halten. Hierzu fährt die Steuer- und Überwachungseinrichtung 11 die Drehzahl des Antriebsmotors 4 weiter hoch, was wiederum einen erhöhten Bedarf an elektrischer Energie nach sich zieht. Auch der dadurch zusätzlich vom Generator 3 zu liefernde Strom muss durch den Dieselmotor 2 erzeugt werden, der weiterhin durch die Drehzahlregelung 9 bei seiner Solldrehzahl gehalten wird.

Die Steuer- und Überwachungseinrichtung 11 überwacht nun, ob die am Dieselmotor 2 durch Zuschalten der ersten Gruppe 12a von Heizstäben der Heizeinrichtung 10 anliegende Last bzw. der vom Generator 3 zu liefernde Strom einen Schwellwert (z.B. 20 A) überschreitet. Optional kann die Steuer- und Überwachungseinrichtung 11 zusätzlich auch überwachen, ob die Betriebstemperatur des Dieselmotors 2 das für das Abbrennen von Rußanhaftungen notwendige Betriebsniveau innerhalb einer bestimmten Zeitspanne erreicht.

Tritt keines dieser Ereignisse innerhalb einer vorgegebenen Zeitspanne ein, so gibt die Steuer- und Überwachungseinrichtung 11 ein weiteres Steuersignal an die Heizeinrichtung 10 zum Zuschalten der zweiten Gruppe 12b von Heizstäben ab. Um die dadurch zusätzlich in den Luftstrom VA eingetragene Wärmeleistung zu kompensieren, wird in der voranstehend schon beschriebenen Weise die Drehzahl des elektrischen Antriebsmotors 4 weiter erhöht.

Reicht dies immer noch nicht aus, um die notwendige Last am Dieselmotor 2 zu erzeugen, können optional weitere Heizstäbe der Heizeinrichtung 10 zugeschaltet werden, um den Bedarf an elektrischer Energie zu erhöhen. Die Drehzahl des Antriebsmotors 4 muss auch hier wiederum erhöht werden, um durch erhöhte Kühlleistung den nochmals erhöhten Wärmeeintrag in den Luftstrom VA zu kompensieren.

Im Ergebnis steigt so die elektrische Last des Generators 3 und die vom Dieselmotor 2 entsprechend zu leistende Antriebslast, bis sicher ein für das Abbrennen der Rußanhaftungen ausreichendes Betriebstemperaturniveau erreicht ist.

Der Regenerationsbetrieb der Transportkältemaschine 1 wird über beispielsweise ein Regenerationsintervall tREG von 15 min aufrechterhalten. Anschließend sendet die Steuer- und Überwachungseinrichtung 11 ein Steuersignal zum Abschalten an die Heizeinrichtung 10 und es beginnt ein neues Betriebszeitintervall, in dem die Transportkältemaschine 1 im normalen Kühlbetrieb bei entsprechend hinsichtlich der Kühlleistung sollwertgeführter Betriebsweise des Dieselmotors 2 betrieben wird.

In umgekehrter Weise erfolgt die Regeneration des Dieselmotors 2, wenn die Transportkältemaschine 1 im Erwärmungsbetrieb läuft.

Dabei wird während des beispielsweise jeweils 250 Stunden dauernden jeweiligen Betriebszeitintervalls der Luftstrom VA mittels der Heizeinrichtung 10 (hier erste Temperiereinrichtung) erwärmt, während der Antriebsmotor 4 stillsteht und über den Wärmetauscher 8 keine Kühlleistung an den Luftstrom VA abgegeben wird. Für die Regeneration des Dieselmotors 2 wird dann der Antriebsmotor 4 in Betrieb genommen, so dass der durch den Wärmetauscher 8 (hier zweite Temperiereinrichtung) strömende Luftstrom VA vor dem Eintritt in die Heizeinrichtung 10 zusätzlich abgekühlt wird. Um diese Abkühlung zu kompensieren, muss die Heizleistung der Heizeinrichtung 10 durch Zuschalten weiterer Gruppen 12a, 12b von Heizstäben erhöht werden. Beides führt, wie voranstehend erläutert, zu einer Erhöhung des vom Generator 3 zu liefernden Stroms und damit zu einer Erhöhung der vom Dieselmotor 2 zu bewältigenden Last mit der Folge, dass die Betriebstemperatur des Dieselmotors 2 auf ein Niveau steigt, bei dem in ihm vorhandene Verrußungen abbrennen. Der Regenerationsbetrieb wird auch hier über ein ausreichend langes Regenerationsintervall (z.B. 15 min) aufrechterhalten und anschließend wieder der Normalbetrieb über das bis zur nächsten Regeneration vorgesehene Betriebszeitintervall aufgenommen.

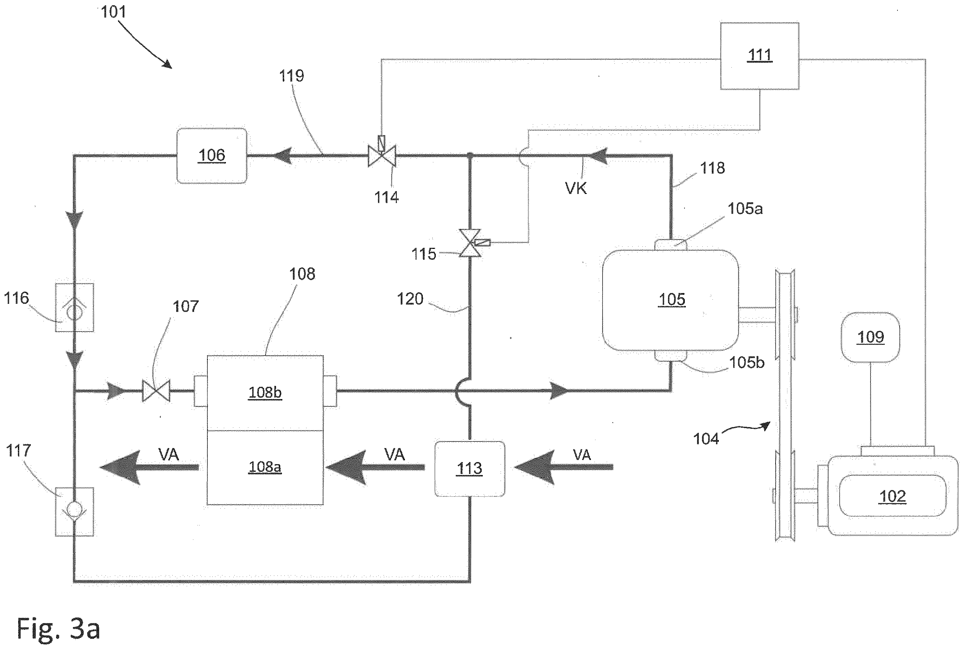

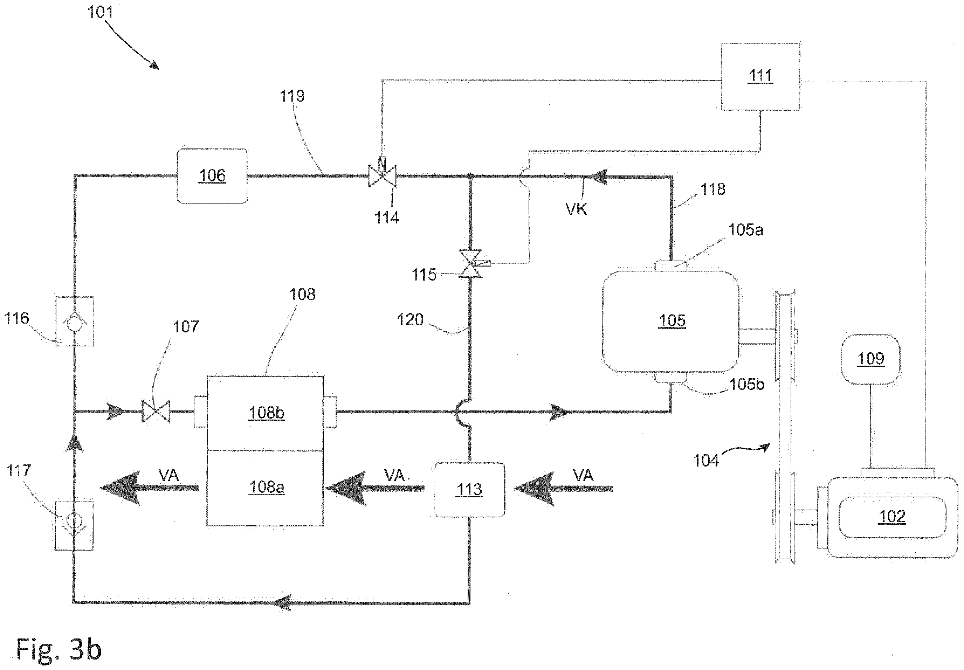

Auch die in den Figuren 3a,3b gezeigte Transportkältemaschine 101 umfasst einen wie der Dieselmotor 2 ausgebildeten Dieselmotor 102, einen Verdichter 105, einen ersten Kondensator 106, eine Drossel 107, einen Wärmetauscher 108, eine Drehzahlregeleinrichtung 109 und eine Steuer- und Überwachungseinrichtung 111.

Im Unterschied zu dem in Fig. 1 dargestellten Konzept ist bei der in den Figuren 3a,3b dargestellten Transportkältemaschine 101 der Antriebsmotor 102 mittels eines Riementriebs 104 mechanisch direkt mit dem Verdichter 105 verkoppelt. Die Drehzahl des Verdichters 105 ist somit direkt proportional zur Drehzahl des Dieselmotors 102.

Zusätzlich sind bei der Transportkältemaschine 101 als zweite Temperiereinrichtung ein zweiter Kondensator 113, zwei Stellventile 114, 115 und zwei Rückschlagventile 116,117 vorgesehen.

Die vom Ausgang 105a des Verdichters 105 wegführende Kältefluidleitung 118 teilt sich in zwei Äste 119, 120, von denen im einen Ast das erste Stellventil 114 und im anderen Ast das zweite Stellventil 115 angeordnet sind. Die Stellventile 114,115 sind an jeweils einen Steuerausgang der Steuer- und Überwachungseinrichtung 111 angeschlossen.

Im Normalbetrieb (Fig. 3a) ist das Stellventil 114 geöffnet und das Stellventil 115 geschlossen. Das Kältefluid VK strömt dann durch den ersten Ast 119 der Kältefluidleitung 118 zum ersten Kondensator 106 und von dort über das erste Rückschlagventil 116 und über die Drossel zur Primärseite 108b des Wärmetauschers 108. Das zweite Rückschlagventil 117 ist dabei geschlossen und verhindert ein Abströmen des Kältefluids VK in den zweiten Ast 120 der Kältefluidleitung 118.

Im Regenerationsbetrieb (Fig. 3b) ist dagegen das Stellventil 115 geöffnet und das Stellventil 114 geschlossen. In diesem Fall strömt das Kältefluid VK durch den zweiten Ast 120 der Kältefluidleitung 118 zum zweiten Kondensator 113 und von dort über das zweite Rückschlagventil 117 und über die Drossel zur Primärseite 108b des Wärmetauschers 108. Das erste Rückschlagventil 117 ist dabei geschlossen und verhindert ein Abströmen des Kältefluids VK in den ersten Ast 119 der Kältefluidleitung 118.

Vom Ausgang der Primärseite 108b des Wärmetauschers 108 strömt das Kältefluid VK jeweils wieder zum Eingang 105b des Verdichters 105.

Durch die Sekundärseite 108a des Wärmetauschers 108 wird der zu kühlende, aus dem Laderaum des Nutzfahrzeugs stammende Luftstrom VA geleitet. Der zweite Kondensator 113 sitzt dabei als zweite Temperiereinrichtung im Strömungsweg des Luftstroms VA, so dass der Luftstrom VA entlang des zweiten Kondensators 113 streicht, bevor er in den Wärmetauscher 108 eintritt.

Im Normalbetrieb strömt kein Kältefluid VK durch den zweiten Kondensator 113, so dass dieser keine Wärme abgibt und dementsprechend auch keinen Einfluss auf die Temperatur des in den Wärmetauscher 108 einströmenden Luftstroms VA hat.

Wird dagegen nach Eintritt eines entsprechenden Ereignisses, z.B., wenn eine bestimmte Betriebsdauer des Dieselmotors 102 erreicht ist, der Regenerationsbetrieb aufgenommen, so schließt auf entsprechende Stellsignale der Steuer- und Überwachungseinrichtung 111 hin zunächst das Stellventil 114 und öffnet das Stellventil 115. Kältefluid VK strömt nun durch den zweiten Ast 120 der Kältefluidleitung und kondensiert unter Wärmeabgabe im Kondensator 113. Der an dem Kondensator 113 entlang geführte Luftstrom wird entsprechend erwärmt, bevor er in den Wärmetauscher 108 eintritt, um dort auf eine Solltemperatur abgekühlt zu werden.

Ergibt sich aufgrund der durch den Luftstrom VA bewirkten verstärkten Wärmeabfuhr am Kondensator 113 im Ast 120 der Kühlfluidleitung 118 ein Druck, der einem zulässigen Grenzdruck nahekommt, so wird das Ventil 114 geöffnet, um einen Teilstrom des Kältefluids über den ersten Kondensator 106 zu leiten und den Ast 120 der Kühlfluidleitung 118 zu entlasten. Ist der Druck im Ast 120 auf diese Weise wieder unterhalb eines Referenzwertes gesunken, wird das Ventil 114 solange wieder geschlossen, bis sich im Ast 120 der Kühlfluidleitung 118 erneut ein Druck aufgebaut hat, der dem zulässigen Grenzdruck nahekommt, woraufhin das Ventil 114 wieder geöffnet wird. Dieses beim hier beschriebenen Beispiel in Abhängigkeit vom Druck im Ast 120 der Kühlfluidleitung 118 wechselweise erfolgende Öffnen und Schließen des Ventils 114 wird bis zum Ende des Regenerationsintervalls fortgesetzt, so dass die vom Kondensator 113 an den ihn anströmenden Luftstrom VA abgegebene Wärmemenge trotz der Druckbegrenzung maximiert ist, die für den Ast 120 der Kühlfluidleitung 118 und die an ihn angebundenen, von dem Kühlfluid durchströmten Aggregate gilt.

Alternativ oder ergänzend zu der hier beschriebenen, in Abhängigkeit vom Druck im Ast 120 erfolgenden Steuerung des Ventils 114 könnte das Ventil zeitabhängig geöffnet und geschlossen werden, wobei die Öffnungs- und Schließzeiten so bemessen werden, dass der Druck im Ast 120 der Kühlfluidleitung 118 nicht über den jeweils zulässigen Grenzwert steigt. Da die vom Dieselmotor 102 zu erbringende Leistung proportional zum Druck im Ast 120 ist, wäre es ebenso möglich, die Leistungsabgabe am Antriebsmotor 102 zu überwachen und das Ventil 114 zu öffnen, wenn die Leistungsabgabe einen bestimmten Maximalwert überschreitet, oder zu schließen, wenn die Leistungsaufnahme einen bestimmten Minimalwert unterschreitet.

Entsprechend der über den Kondensator 113 in den Luftstrom VA eingetragenen Wärme mehr Kälteleistung muss über den Wärmetauscher 108 in den Luftstrom VA eingebracht werden, um die zuvor erfolgte Erwärmung des Luftstroms VK zu kompensieren. Um die benötigte Kälteleistung bereitzustellen, muss die Drehzahl des Verdichters 105 und damit einhergehend die des Antriebsmotors 102 erhöht werden. Dies wiederum bewirkt eine Erhöhung der Betriebstemperatur des Dieselmotors 102 mit der Folge, dass Verrußungen im Dieselmotor 102 abbrennen.

Nachdem der Regenerationsbetrieb über einen ausreichend langen Zeitraum aufrechterhalten worden ist, hat der Dieselmotor 102 wieder ein normales Leistungsvermögen erreicht. Die Stelleinrichtung 111 gibt nun wieder Stellsignale ab, auf die hin das Stellventil 114 öffnet und das Stellventil 115 schließt, um zum normalen Kühlbetrieb der Transportkältemaschine 101 zurückzukehren.

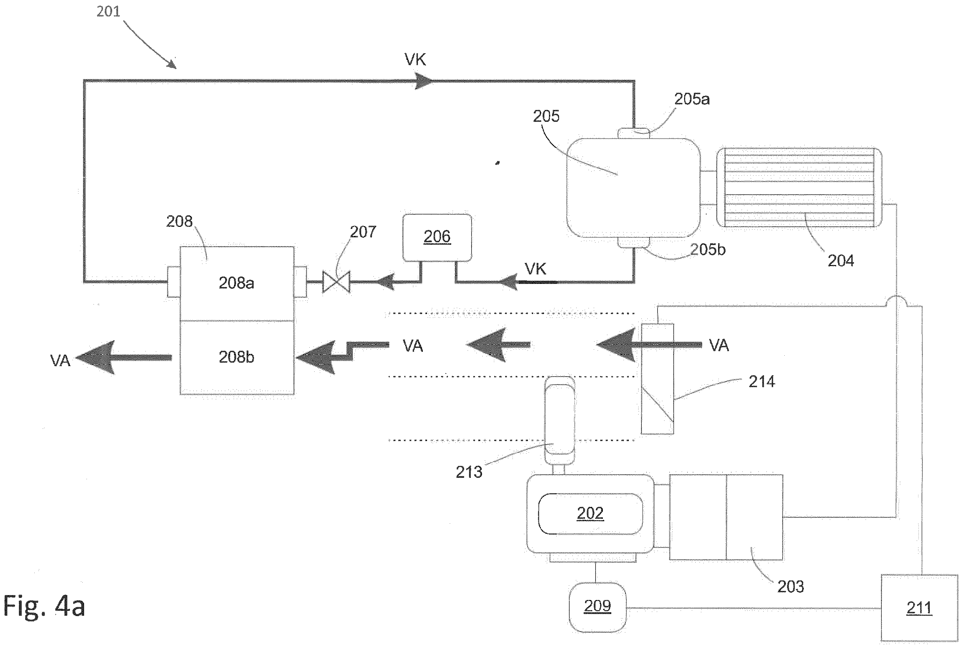

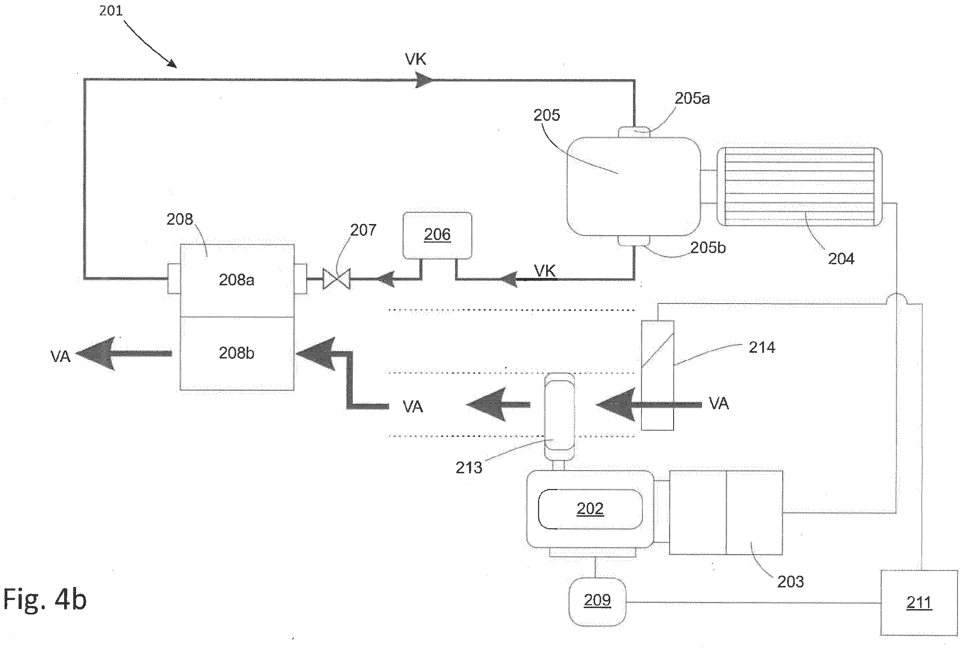

Wie die Transportkältemaschine 1 umfasst die in den Figuren 4a,4b gezeigte Transportkältemaschine 201 einen wie der Dieselmotor 2 ausgebildeten Dieselmotor 202, einen Generator 203, einen elektrisch betriebenen Antriebsmotor 204, einen vom Antriebsmotor 204 angetriebenen Verdichter 205, einen Kondensator 206, eine Drossel 207, einen Wärmetauscher 208, eine Drehzahlregeleinrichtung 209 und eine Steuer- und Überwachungseinrichtung 211.

Der Dieselmotor 202 treibt auch hier den Generator 203 an, der elektrische Energie zum Antrieb des elektrischen Antriebsmotors 204 erzeugt. Die Drehzahlregeleinrichtung 209 hält den Dieselmotor 202 ebenfalls bei einer konstanten Betriebsdrehzahl von beispielsweise 1600 min⁻¹ in einem hinsichtlich der Energieausnutzung optimalen Betriebspunkt.

Gegenüber den in den Figuren 1 bis 3b dargestellten Ausgestaltungen von Transportkältemaschinen 1, 101 ist in den Figuren 4a,4b zusätzlich ein bei Verbrennungsmotoren üblicherweise vorgesehener Wasserkühler 213 dargestellt.

Wie bei den Wärmetauschern 8,108 bildet der Wärmetauscher 208 eine erste Temperiereinrichtung der Transportkältemaschine 201 und hat eine Sekundärseite 208a, durch die der zu kühlende, aus dem Laderaum abströmende Luftstrom VA geleitet wird, und eine Primärseite 208b, die vom Kühlfluid-Volumenstrom VK durchströmt wird, der über eine Zuströmleitung vom Verdichterausgang 205a über den Kondensator 206 und die Drossel 207 zum Wärmetauschereingang strömt.

In Strömungsrichtung vor dem Wärmtauscher 208 ist eine Luftleiteinrichtung 214 angeordnet, deren Steuereingang an einen Steuerausgang der Steuer- und Überwachungseinrichtung 211 angeschlossen ist.

Im Normalbetrieb (Fig. 4a) leitet die Luftleiteinrichtung 214 den zu kühlenden Luftstrom VA auf direktem Wege zum Wärmetauscher 208.

Stellt die Steuer- und Überwachungseinrichtung 211 dagegen fest, dass der Dieselmotor 202 beispielsweise über eine zu lange Dauer in einem eine Verrußung mit sich bringenden Betriebszustand betrieben worden ist, so gibt die Steuer- und Überwachungseinrichtung 211 zum Start des Regenerationsbetriebs ein Stellsignal ab, auf das hin die Luftleiteinrichtung 214 den Luftstrom VA so umleitet, dass er durch den Wasserkühler 213 des Dieselmotors 202 strömt, bevor er in den Wärmetauscher 208 eintritt (Fig. 4b). Der Wasserkühler 213 stellt somit ebenfalls eine zweite Temperiereinrichtung dar, durch die der Luftstrom VA vor seiner Abkühlung im Wärmetauscher 208 zusätzlich erwärmt wird mit der Folge, dass auch hier der Wärmetauscher 208 eine erhöhte Kälteleistung aufbringen muss, um den Luftstrom VA auf seine Soll-Temperatur abzukühlen.

Um diese erhöhte Kälteleistung bereitzustellen, muss die Drehzahl des Verdichters 205 und damit einhergehend die Antriebsleistung des Antriebsmotors 204 erhöht werden. Dies wiederum hat zur Folge, dass am Generator 203 und damit einhergehend am Dieselmotor 202 eine erhöhte Last anliegt. Im Ergebnis muss der Dieselmotor 202 somit eine erhöhte Leistung erbringen, die zu einem angestrebten Anstieg seiner Betriebstemperatur führt.

Reicht die vom hier als zweite Temperiereinrichtung eingesetzten Wasserkühler 213 an den Luftstrom VA abgegebene Wärme als Last für die Regeneration des Dieselmotors 202 nicht aus, so kann der Luftstrom VA während des Regenerationsintervalls auch so umgeleitet werden, dass er den Dieselmotor 202 insgesamt überstreicht und/oder entlang des hier nicht gezeigten Abgassystems des Dieselmotors 202 geleitet wird, um zusätzlich Wärme in den Luftstrom VA einzubringen.

Nach einem für das Abbrennen der Verrußungen bei der so erhöhten Betriebstemperatur des Dieselmotors 202 ausreichend langen Dauer des Regenerationsbetriebs gibt die Steuer- und Überwachungseinrichtung 211 ein weiteres Stellsignal ab, auf das hin die Luftleiteinrichtung 214 sich wieder in ihre Normalstellung für den Normalbetrieb verstellt, bei der der Luftstrom VA auf direktem Wege, ohne zusätzlich temperiert zu werden, zum Wärmetauscher 208 gelangt.

Bei den in den Figuren 3a - 4b dargestellten Ausgestaltungen einer erfindungsgemäß betriebenen Transportkältemaschine 101 und 102 ist das Aggregat, das die zweite Temperiereinrichtung bildet (Kondensator 113, Wasserkühler 213), jeweils in Strömungsrichtung des Luftstroms VA vor der ersten Temperiereinrichtung (Wärmetauscher 108, 208) angeordnet, so dass der Luftstrom VA erwärmt wird, bevor er in die erste Temperiereinrichtung (Wärmetauscher 108, 208) eintritt. Es versteht sich von selbst, dass die jeweilige zweite Temperiereinrichtung (Kondensator 113, Wasserkühler 213) bei diesen Ausgestaltungen mit demselben Effekt auch in Strömungsrichtung des Luftstroms VA hinter der jeweiligen ersten Temperiereinrichtung (Wärmetauscher 108, 208) angeordnet sein könnte, dass also erst eine Kühlung des Luftstroms stattfindet und anschließend eine Erwärmung, so dass auch hier zusätzliche Kühlleistung eingebracht werden muss, um die Solltemperatur der Laderaumatmosphäre zu erreichen.

### BEZUGSZEICHEN

- 1: Transportkältemaschine
- 2: Dieselmotor
- 3: Generator
- 4: elektrisch betriebener Antriebsmotor (elektrischer Verbraucher)
- 5: Verdichter
- 5a: Verdichterausgang
- 5b: Verdichter-Ansaugseite
- 6: Kondensator
- 7: Drossel (Expansionseinrichtung)
- 8: Wärmetauscher (erste Temperiereinrichtung)
- 8a: Sekundärseite des Wärmetauschers 8
- 8b: Primärseite des Wärmetauschers 108
- 8c: Kühlfluid-Eingang des Wärmetauschers 108
- 8d: Kühlfluid-Ausgang des Wärmetauschers 108
- 9: Drehzahlregeleinrichtung
- 10: Heizeinrichtung (zweite Temperiereinrichtung)
- 11: Steuer- und Überwachungseinrichtung
- 12a,12b: Heizstabgruppen der Heizeinrichtung 10
- 101: Transportkältemaschine
- 102: Dieselmotor
- 104: Riementrieb
- 105: Verdichter
- 105a: Ausgang des Verdichters 105
- 105b: Eingang des Verdichters 105
- 106: erster Kondensator
- 107: Drossel (Expansionseinrichtung)
- 108: Wärmetauscher (erste Temperiereinrichtung)
- 108a: Sekundärseite des Wärmetauschers 108
- 108b: Primärseite des Wärmetauschers 108
- 109: Drehzahlregeleinrichtung
- 111: Steuer- und Überwachungseinrichtung
- 113: zweiter Kondensator (zweite Temperiereinrichtung)
- 114,115: Stellventile
- 116,117: Rückschlagventile
- 118: Kältefluidleitung
- 119,120: Äste der der Kältefluidleitung 118
- 201: Transportkältemaschine
- 202: Dieselmotor
- 203: Generator
- 204: elektrisch betriebener Antriebsmotor
- 205: Verdichter
- 205a: Ausgang des Verdichters 205
- 205b: Eingang des Verdichters 205
- 206: Kondensator (zweite Temperiereinrichtung)
- 207: Drossel (Expansionseinrichtung)
- 208: Wärmetauscher (erste Temperiereinrichtung)
- 208a: Sekundärseite des Wärmetauschers 108
- 208b: Primärseite des Wärmetauschers 108
- 209: Drehzahlregeleinrichtung
- 211: Steuer- und Überwachungseinrichtung
- 213: Wasserkühler des Dieselmotors 202
- 214: Luftleiteinrichtung

- VA: Luftstrom
- VK: Kühlfluid-Volumenstrom

## Patentansprüche

1. Verfahren zum Betrieb einer an einem Nutzfahrzeug befestigten Transportkältemaschine (1,101,201), die eine in einem Laderaum des Nutzfahrzeugs enthaltene Laderaumatmosphäre temperiert, indem ein Strom (VA) der Laderaumatmosphäre durch die Transportkältemaschine (1,101,201) geleitet wird und dabei eine erste Temperiereinrichtung (8,108,208) passiert, in der der Strom (VA) der Laderaumatmosphäre abgekühlt oder erwärmt wird, wobei die im Laderaum jeweils gegebene Ist-Temperatur erfasst und die erste Temperiereinrichtung (8,108,208) mittels eines Dieselmotors (2,102,202) angetrieben wird, dessen an die erste Temperiereinrichtung (8,108,208) abgegebene Leistung so geregelt wird, dass die jeweils erfasste Ist-Temperatur im Laderaum in einem Soll-Temperatur-Bereich und die Drehzahl des Dieselmotors (2,102,202) in einem Soll-Drehzahl-Bereich liegt, **dadurch**
**gekennzeichnet, dass** der zeitliche Verlauf mindestens eines der Betriebsparameter oder Betriebsereignisse "Ende eines vorgegebenen Betriebszeitintervalls, Betriebsdauer, Betriebslast, Betriebstemperatur, Brennstoffverbrauch, Abgastemperatur, Abgaszusammensetzung" des Dieselmotors (2,102,202) erfasst wird und **dass** bei Erreichen eines für den betreffenden Betriebsparameter vorgegebenen Grenzwertes oder bei Eintreten des betreffenden Betriebsereignisses der Dieselmotor (2,102,202) über ein Regenerationsintervall mit einer zusätzlichen Last beaufschlagt wird.

2. Verfahren nach Anspruch 1, **dadurch gekennzeichnet, dass** die zusätzliche Last, mit der der Dieselmotor (2,102,202) während des Regenerationsintervalls beaufschlagt wird, dadurch erzeugt wird, dass der Strom (VA) der Laderaumatmosphäre auf seinem Weg durch die Transportkältemaschine (1,101,201) an einer zweiten Temperiereinrichtung (10, 113, 206) entlang geleitet wird, in der eine Temperierung des Stroms (VA) der Laderaumatmosphäre erfolgt, die der Temperierung entgegengesetzt ist, welche durch die erste Temperiereinrichtung (8,108,208) bewirkt wird.

3. Verfahren nach Anspruch 2, **dadurch gekennzeichnet, dass** der Strom (VA) der Laderaumatmosphäre, wenn er die erste Temperiereinrichtung (8,108,208) passiert, gekühlt und zur Erzeugung der zusätzlichen Last während des Regenerationsintervalls durch die zweite Temperiereinrichtung (10, 113, 206) erwärmt wird.

4. Verfahren nach Anspruch 2, **dadurch gekennzeichnet, dass** der Strom (VA) der Laderaumatmosphäre, wenn er die erste Temperiereinrichtung passiert, erwärmt und zur Erzeugung der zusätzlichen Last während des Regenerationsintervalls durch die zweite Temperiereinrichtung gekühlt wird.

5. Verfahren nach einem der voranstehenden Ansprüche, **dadurch gekennzeichnet, dass** die Transportkältemaschine (1,101,201) einen von dem Dieselmotor (2,102,202) angetriebenen Verdichter (5,105,205) zum Verdichten eines Kühlfluids (VK), einen nach dem Verdichter (5,105,205) von dem Kühlfluid (VK) durchströmten Kondensator, in dem das verdichtete Kühlfluid (VK) unter Freisetzung von Wärme kondensiert, eine Expansionseinrichtung (7,107,207), an der das Kühlfluid (VK) unter Entzug von Wärme expandiert, und einen von dem expandierten und abgekühlten Kühlfluid (VK) durchströmten Wärmetauscher (8,108,208) umfasst, von dem das Kühlmittel zurück zum Verdichter (5) strömt.

6. Verfahren nach Anspruch 3 und 5, **dadurch gekennzeichnet, dass** die erste Temperiereinrichtung (8,108,208) durch den Wärmetauscher der Transportkältemaschine (1,101,201) gebildet ist, in dem der Strom (VA) der Laderaumatmosphäre abgekühlt wird.

7. Verfahren nach Anspruch 6, **dadurch gekennzeichnet, dass** die zweite Temperiereinrichtung durch einen Kondensator (113, 206) der Transportkältemaschine (101,201) gebildet ist, an dem der Strom (VA) der Laderaumatmosphäre während des Regenerationsintervalls bedarfsweise erwärmt wird.

8. Verfahren nach Anspruch 6, **dadurch gekennzeichnet, dass** die zweite Temperiereinrichtung durch eine separate Heizeinrichtung (10) gebildet ist, die ebenfalls von dem Dieselmotor (2,102,202) angetrieben ist und entlang der der Strom (VA) der Laderaumatmosphäre während des Regenerationsintervalls geleitet wird.

9. Verfahren nach einem der voranstehenden Ansprüche, **dadurch gekennzeichnet, dass** mindestens eine der Temperiereinrichtungen (8, 208; 10, 113, 206) elektrisch angetrieben ist und **dass** der Dieselmotor (2,202) zum Antrieb der elektrisch angetriebenen Temperiereinrichtung (8, 208; 10, 206) einen Generator (3, 203) antreibt, der die elektrische Energie erzeugt, mit der diese Temperiereinrichtung (8, 208; 10, 206) angetrieben wird.

10. Verfahren nach Anspruch 9, **dadurch gekennzeichnet, dass** zur Erzeugung der zusätzlichen Last, mit der der Dieselmotor (2) während des Regenerationsintervalls beaufschlagt wird, während des Regenerationsintervalls ein zusätzlicher elektrischer Verbraucher (10) eingeschaltet wird, der ebenfalls mittels des von dem Dieselmotor (2) angetriebenen Generators (3) mit elektrischer Energie versorgt wird.

11. Verfahren nach einem der Ansprüche 8 und einem der Ansprüche 9 oder 10, **dadurch gekennzeichnet, dass** die zweite Temperiereinrichtung als elektrisch betriebene Heizeinrichtung (10) ausgebildet ist, die von dem vom Dieselmotor (2) angetriebenen Generator (3) mit elektrischer Energie versorgt wird und als zusätzliche Last während des Regenerationsintervalls eingeschaltet wird.

12. Verfahren nach einem der Ansprüche 10 oder 11, **dadurch gekennzeichnet, dass** während des Regenerationsintervalls die von dem Generator (3) abgegebene elektrische Leistung überwacht wird und im Fall, dass die abgegebene elektrische Leistung außerhalb eines Sollbereichs liegt, die Leistung des elektrischen Verbrauchers (4,10) geregelt wird, bis die vom Generator (3) abgegebene elektrische Leistung innerhalb des Sollbereichs liegt.

13. Verfahren nach einem der Ansprüche 5 bis 8, **dadurch gekennzeichnet, dass** der Dieselmotor (102) zum Antrieb des Verdichters (105) mechanisch mit dem Verdichter (105) verkoppelt ist, und **dass**, wenn die Transportkältemaschine (101) in einem Kühlbetrieb läuft, die erste Temperiereinrichtung durch einen Wärmetauscher (108) der Transportkältemaschine (101), in dem der Strom (VA) der Laderaumatmosphäre abgekühlt wird, und die zweite Temperiereinrichtung durch einen Kondensator (113) der Transportkältemaschine (101) gebildet ist, an dem der Strom (VA) der Laderaumatmosphäre während des Regenerationsintervalls zur Erzeugung der zusätzlichen Last erwärmt wird.

14. Verfahren nach einem der voranstehenden Ansprüche, **dadurch gekennzeichnet, dass** die Laderaumatmosphäre aus Luft besteht.

15. Verfahren nach einem der voranstehenden Ansprüche, **dadurch gekennzeichnet, dass** die Drehzahlregelung (9,109,209) die Drehzahl des Dieselmotors (2,102,202) während der Regenerationsphase in einem Soll-Drehzahl-Bereich hält, der von 1150 min⁻¹ bis 2500 min⁻¹ reicht.
